# NEUE EUROPÄISCHE PATENTSCHRIFT

(11) **EP 1 259 560 B2**
(45) Veröffentlichungstag und Bekanntmachung des Hinweises auf die Entscheidung über den Einspruch: **27.04.2011**
(45) Hinweis auf die Patenterteilung: 12.05.2004
(21) Anmeldenummer: 01915290.9
(22) Anmeldetag: 22.02.2001
(51) Int. Cl.: C08G 65/26

(54) **VERFAHREN ZUR HERSTELLUNG VON POLYETHERPOLYOLEN**
METHOD FOR PRODUCING POLYETHERPOLYOLS
PROCEDE DE PRODUCTION DE POLYOLS DE POLYETHER

(30) Priorität: 24.02.2000 DE 10008635
(43) Veröffentlichungstag der Anmeldung: 27.11.2002
(73) Patentinhaber: BASF SE, 67056 Ludwigshafen (DE)
(72) Erfinder: OSTROWSKI, Thomas, 44581 Castrop-Rauxel (DE); HARRE, Kathrin, 01109 Dresden (DE); GROSCH, Georg, Heinrich, 67098 Bad Dürkheim (DE); HÖPPNER, Gerd, 01987 Schwarzheide (DE); DE VOCHT, Peter, B-2520 Ranst (BE); LEYS, Dirk, B-2288 Grobbedonk (BE); WINKLER, Jürgen, 01987 Schwarzheide (DE); BAUER, Stephan, 49179 Ostercappeln (DE)
(74) Vertreter: Kern, Hedwig
(86) Internationale Anmeldenummer: PCT/EP2001/002032
(87) Internationale Veröffentlichungsnummer: WO 2001/062825

(56) Entgegenhaltungen:
- EP-A1- 0 853 975
- WO-A1-95/11213
- WO-A1-97/23544
- WO-A1-99/16775
- WO-A1-99/44739
- DE-A- 1 936 046
- DE-A- 19 742 978
- DE-A- 19 809 539
- US-A- 3 829 505
- US-A- 3 894 093
- US-A- 3 900 518
- US-A- 3 941 849
- US-A- 5 482 908
- US-A- 5 563 296
- US-A- 5 689 102
- US-A- 5 811 595

## Beschreibung

Die Erfindung betrifft ein Verfahren zur Herstellung von Polyetherpolyolen.

Polyetherpolyole werden in großem Umfang, insbesondere für die Herstellung von Polyurethanschäumen bereitgestellt. Die bekannten Herstellungsverfahren von Polyetherpolyolen erfolgen in der Regel aus Alkylenoxiden in Gegenwart eines kurzkettigen Starters unter Einsatz unterschiedlicher Katalysatoren, wie Basen, hydrophobierte Doppelschichthydroxide, saure oder lewissaure Systeme, metallorganische Verbindungen oder Multimetallcyanidkomplex-Verbindungen.

Heterogene Multimetallcyanidkomplex-Katalysatoren sind hochselektive und aktive Katalysatoren, die sich insbesondere zur Herstellung von Weichschaumpolyetherpolyolen, bei denen ein hohes Molekulargewicht erreicht werden muß und bei denen lange Oxalkylierungszeiten erforderlich sind, eignen. Durch den Einsatz von Multimetallycyanidkomplex-Katalysatoren können die Herstellungskosten gesenkt werden und gleichzeitig hochwertiges Polyetherpolyol, das zu geruchsarmen und damit hochwertigen Polyurethanschäumen weiterverarbeitet werden kann, erhalten werden. Aus der Literatur ist bekannt, daß Nebenreaktionen, die zur Bildung von Geruchsstoffen und ungesättigten Bestandteilen führen können, kaum auftreten.

Die hohe Aktivität hat allerdings zur Folge, daß die Reaktionswärme in herkömmlichen Reaktoren nicht mehr abgeführt werden kann. Wird die multimetallcyanidkomplex-katalysierte Polyetherpolyolherstellung in Standard-Rührkesseln durchgeführt, so sind die Dosierraten an Alkylenoxid durch die Wärmeabfuhrleistung der Wärmetauscher begrenzt.

US 5,811,595 schlägt einen ideal durchmischten Reaktor mit einem oder zwei Wärmetauschern vor. Das Polyetherpolyol wird in den Kreislaufstrom des Wärmetauschers, das Ethylenoxid in den Reaktor eingespeist. Durch eine Düse wird eine Vermischung des Ethylenoxid mit der flüssigen Phase erreicht.

Nachteilig bei diesem Verfahren ist die hohe Umpumpmenge, die zur Aufrechterhaltung der hohen Wärmeabfuhrkapazitäten erforderlich ist sowie die Gefahr der mechanischen Schädigung des heterogenen Katalysators durch die Pumpe. Weiterhin wird das hochreaktive Ethlyenoxid in den Reaktor eingefüllt, in dem die Wärmeabfuhr wegen der verwendeten Kühlschlangen insbesondere bei niedrigen Füllgraden aufgrund der kleinen Austauschfläche sehr schlecht ist. Überhitzungen aufgrund der hohen Reaktionsgeschwindigkeit sind die Folge, die zur Produktschädigung führen können. Dies kann sich durch die schlechte Durchmischung im Reservoir verstärken. Im Reservoir sind zwar Rohrschlangen zur Kühlung vorgesehen, diese sind aber bei niedrigen Füllgraden aufgrund der kleinen Austauschfläche sehr uneffektiv.

Die EP 850 954 beschreibt ein Verfahren, bei dem die Reaktion im Gasraum oberhalb der Flüssigkeit stattfindet. Das Polyetherpolyol wird im Kreis über einen Wärmetauscher gepumpt und durch Düsen eingespeist. Dies hat eine hohe Flüssigkeitsoberfläche zur Folge. Parallel dazu werden Ethylenoxid und Polyetherpolyol über Düsen zudosiert. Die große Oberfläche bewirkt einen guten Stoffaustausch und somit hohe Reaktionsgeschwindigkeiten.

Aufgrund der hohen Reaktionsgeschwindigkeit, die mit diesem Verfahren erreicht werden kann, sind lokale Übertemperaturen in den einzelnen Tröpfchen zu erwarten, die wiederum Produktschädigungen zur Folge haben. Weiterhin ist auch hier die hohe zur Wärmeabfuhr erforderliche Umpumpmenge nicht unbedenklich für den heterogen dispergierten Multimetallcyanidkomplex-Katalysator; die Gefahr von Schädigungen kann nicht ausgeschlossen werden.

Die künstlich vergrößerte Gasphase stellt weiterhin, insbesondere bei der Ethoxylierung, ein Gefahrenpotential dar, da freies Alkylenoxid in der Gasphase vorliegt. Ethylenoxid neigt zum Gasphasenzerfall, der zum Bersten des Reaktors führen kann. Im Fall der Einleitung des Polyetherpolyols oder Ethylenoxids in die Flüssigkeit ist dagegen aufgrund des vorliegenden Multimetallcyanidkomplexes ein schnelles Abreagieren des Alkylenoxids zu erwarten.

Aus EP-B-0 633 060 ist ein Reaktor für Gas-Flüssig-Reaktionen bekannt mit einer zentralen Rührvorrichtung, um die herum von einem Wärmetauschmittel durchströmte Wärmetauscherplatten in einem Winkel von 0 bis 70° in Drehrichtung des Rührers zum Reaktorradius angeordnet sind. Durch die direkte Wärmeabführung am Ort ihrer Entstehung kann eine erhöhte Produktivität. eine hohe Produktqualität sowie ein reduzierter Katalysatorverbrauch sichergestellt werden. Der Reaktor der EP-B-0 633 060 wurde insbesondere für stark exotherme katalytische Hydrierungsreaktionen vorgeschlagen.

DE-A- 19 809 539 beschreibt ein Verfahren zur Herstellung von Polyetherpolyolen durch Umsetzung von Startern mit Alkylenoxiden in Gegenwart eines in einem Katalysatorrohr fixierien Multimetallcyanidkomplex-Katalysators in einem Rührkesselreaktor, wobei das Reaktions gemisch mittels einer Pumpe über einen außen liegenden Wärmetauscher im Kreis geführt wird.

Es war Aufgabe der Erfindung, ein apparativ einfaches Verfahren zur Herstellung von Polyetherpolyolen in Gegenwart von Multimetallcyanidkomplex-Katalysatoren unter Verbesserung der Raumzeitausbeute sowie Vermeidung von örtlichen Überhitzungen und dadurch verstärkt ablaufenden Nebenreaktionen, d.h. unter Gewährleistung einer hohen Produktqualität, bereitzustellen.

Die Lösung geht aus von einem Verfahren zur Herstellung von Polyetherpolyolen durch Umsetzung von Diolen oder Polyolen mit Ethylenoxid, Propylenoxid, Butylenoxid oder Gemischen hiervon in Gegenwart eines suspendierten Multimetallcyanidkomplex-Katalysators der in einem zweistufigen Prozess hergestellt wurde, wonach zunächst eine im wesentlichen alkalifreie Hexacyanocobaltatsäure und anschließend der suspendierte Multimetallcyanidkomplex-Katalysator durch Fällung erhalten wurde, in einem Rührkesselreaktor.

Die Erfindung ist dadurch gekennzeichnet, daß das Reaktionsgemisch mittels einer Pumpe über einen außen liegenden Wärmetauscher im Kreis geführt wird.

Es ist bekannt, daß die KOH-katalysierte, d.h. homogen katalysierte Polyetherpolyol-Herstellung in einem Rührkesselreaktor mit außen liegendem Wärmetauscher durchgeführt werden kann. Die Abführung der Wärme im außen liegenden Wärmetauscher führt dazu, daß keine Beschränkung der Wärmetauscherflächen durch die Reaktordimensionen vorgegeben ist.

Bei Verwendung eines suspendierten heterogenen Katalysators, beispielsweise eines Multimetallcyanidkomplex-Katalysators, entsprechend dem Verfahren der vorliegenden Erfindung, sind jedoch Probleme, bezüglich der Ablagerung von Katalysator im Wärmetauscher und in den Kreislaufleitungen sowie einer mechanischen Schädigung des Katalysators durch die Kreislaufführung zu erwarten.

Überraschend wurde jedoch festgestellt, daß keine Ablagerung des feinen Katalysators im Umpumpkreislauf oder im Wärmetauscher stattfand.

Zudem wurde trotz der sehr hohen Umpumpgeschwindigkeiten keine mechanische Schädigung des Katalysators als Folge der Schervorgänge zwischen den Laufboxen der Pumpe beobachtet, die für einen suspendierten heterogenen Katalysator zu erwarten gewesen wären.

Bezüglich der einsetzbaren Rührkesselreaktoren gibt es keine Einschränkungen. Bevorzugt werden vertikale, insbesondere zylindrische Reaktoren mit vorzugsweise zentralem Rührer eingesetzt. Die Edukte werden in das flüssige Reaktionsgemisch im Rührkessel eingespeist. Das Reaktionsgemisch wird mittels einer Pumpe über einen außen liegenden Wärmetauscher im Kreis geführt.

Für die Kreislaufführung des Reaktionsgemisches können unterschiedliche Pumpentypen eingesetzt werden.

Besonders bevorzugt wird hierzu eine Schraubenspindelpumpe eingesetzt. Bei diesem Pumpentyp bilden die Spindeln durch die besondere Profilgestaltung der Gewindeflanken abgedichtete Kammern, deren Inhalt bei Drehung der Spindeln axial und völlig kontinuierlich von der Saug- zur Druckseite der Pumpen hin verschoben wird. Schraubspindelpumpen haben den Vorteil, daß ihre Förderleistung von der sich im Verlauf der Reaktion ändernden Viskosität weitgehend unabhängig ist. Dadurch kann eine ausreichende Wärmeabfuhr zu jedem Zeitpunkt der Reaktion gewährleistet werden.

Bezüglich des außen liegenden Wärmetauschers gibt es grundsätzlich keine Einschränkungen. Besonders bevorzugt ist der Wärmetauscher in Form von Platten oder Spiralen ausgebildet. Spiralwärmetauscher bieten dabei den Vorteil, daß sie den Katalysator wenig mechanisch belasten. Dieser Wärmetauschertyp wird daher auch für die Herstellung von Dispersionen eingesetzt.

Die Förderrate der Pumpe wird bevorzugt so eingestellt, daß der Reaktorinhalt 5 bis 100 mal pro Stunde, bevorzugt 20 bis 50 mal pro Stunde im Kreis geführt wird. Die Konzentration des Multimetallcyanidkomplex-Katalysators im Reaktionsgemisch wird bevorzugt in einem Bereich, bezogen auf die gesamte, im Reaktor anfallende Produktmenge von < als 250 ppm, bevorzugt < als 100 ppm. insbesondere bevorzugt < als 50 ppm eingestellt. Das Verfahren wird besonders bevorzugt in semi-batch-Fahrweise durchgeführt, d.h. Starter und Katalysator werden vorgelegt und die Alkylenoxide werden in den Reaktor dosiert. Die Reaktorwärme wird abgeführt, um die Reaktionstemperatur kontrollieren zu können.

Die Umsetzung erfolgt bevorzugt bei Temperaturen im Bereich von 80 bis 200°C, und einem Druck von 1 bis 100 bar.

Besonders bevorzugt wird die Umsetzung bei einer Temperatur im Bereich von 90 bis 160°C und einem Druck von 2 bis 20 bar durchgerührt.

Bezüglich der einsetzbaren Multimetallcyanidkomplex-Katalysatoren gibt es grundsätzlich keine Einschränkungen; es können amorphe, bevorzugt jedoch teilkristalline oder kristalline Formen eingesetzt werden.

Der verwendete Multimetallcyanidkomplex-Katalysator ist vom Zink-Kobalt-Typ.

Durch Eintrag von Rührenergie wurde eine intensive Durchmischung aller Komponenten im Rührkessel erreicht. Die außen liegende Anordnung der Wärmetauscher und die hohe Kreislauffluidmenge führten zu einer nahezu vollständigen Gradientenfreiheit der Reaktionstemperatur über den Reaktor. Durch Vermeidung örtlicher Überhitzungen wurden Nebenreaktionen deutlich zurückgedrängt und eine Katalysatordesaktivierung weitgehend vermieden.

Es wurden hohe Raumzeitausbeuten aufgrund der guten Wärmeabfuhr und der dadurch möglichen hohen Alkylenoxiddosiergeschwindigkeiten erreicht.

Besonders vorteilhaft ist, daß bei der erfindungsgemäßen Verwendung eines Rührkesselreaktors mit außen liegenden Wärmetauscher eine niedrigere Produktviskosität gegenüber einem Produkt erreicht werden konnte, das in einem herkömmlichen Rührkesselreaktor mit innen liegenden Kühlschlangen oder mit Mantelkühlung erhalten wurde. Bei Einsatz eines Rührkessels mit außen liegenden Wärmetauscher wurde ein Polyetherpolyol mit einer Viskosität von 595 mPas erhalten, bei einem Verfahren in einem Rührkessel mit Mantelkühlung unter ansonsten unveränderten Bedingungen dagegen ein Polyetherpolyol einer Viskosität von 827 mPas. Weiterhin wurde bei Verwendung eines Rührkesselreaktors mit außen liegendem Wärmetauscher eine symmetrische Molekulargewichtsverteilung beobachtet. Hochmolekulare Bestandteile konnten nicht beobachtet werden. Durch die Verwendung des Rührkesselreaktors mit außen liegendem Wärmetauscher konnten die Gehalte an ungesättigten Bestandteile von 0,061 auf 0,005 meq/g und der Cycloacetalgehalt von 6 auf 0,04 ppm gesenkt werden.

Die Erfindung wird im folgenden anhand von Ausführungsbeispielen näher erläutert:

Die Viskosität wurde nach DIN 51 550 bestimmt.

Die Bestimmung des Gehalts an ungesättigten Bestandteilen erfolgte über die Iodzahl. Hierfür wurden in einem ersten Verfahrensschritt die ungesättigten Anteile bromiert, überschüssiges Brom wurde mit Kaliumjodid-Lösung unter Ausfällung von Iod umgesetzt. Der Gehalt an ungesättigten Bestandteilen in Milliäquivalenten/g (meq/g) ergab sich durch Titration des ausgefällten Iods mit Thiosulfatlösung.

Der Cycloacetalgehalt wurde durch Headspace-GC-MS-Analyse bei einer Probentemperatur von 130°Cbestimmt, wobei die Massenspur von m/e=130 verfolgt wurde.

### Vergleichsbeispiel 1

Ein Polyetherpolyol wurde hergestellt, indem ein Polypropylenoxid-Vorpolymer mit einer mittleren Molmasse von 400 g/mol mit Propylenoxid alkoxyliert wurde. Die Verwendung von KOH als Katalysator in einem Rührkesselreaktor mit innenliegenden Kühlschlangen führte zu einer symmetrischen Molmassenverteilung ohne hochmolekulare Anteile. Es ergab sich eine Viskosität des aufgearbeiteten (neutralisierten) Produkts von 495 mPas (25°C), ein Gehalt an ungesättigten Bestandteilen von 0,061 meq/g und ein Cycloacetalgehalt von 1,7 ppm. Es wurde eine Raum-Zeit-Ausbeute von 105 kg/m³/h erreicht.

### Vergleichsbeispiel 2

Die gleiche Synthese wie in Vergleichsbeispiel 1 wurde in einem Rührkesselreaktor mit außenliegenden Kühlschlangen wiederholt. Die Molmassenverteilung war auch hier symmetrisch, allerdings wurden hochmolekulare Bestandteile nachgewiesen. Die Viskosität des aufgearbeiteten (neutralisierten) Produkts lag bei 503 mPas (25°C). Der Gehalt an ungesättigten Bestandteilen wurde zu 0,060 meq/g und der Cycloacetalgehalt zu 1,75 ppm bestimmt. Es wurde eine Raum-Zeit-Ausbeute von 115 kg/m³/h erreicht.

### Vergleichsbeispiel 3

Anstelle des KOH-Katalysators wurde ein Multimetallcyanidkomplex-Katalysator vom Zn-Co-Typ eingesetzt, der in einem zweistufigen Prozeß hergestellt wurde, wonach zunächst die Säure und anschließend der Katalysator durch Fällung erhalten wurde. Hierzu wurden 7 l stark saurer Ionenaustauscher, der sich in der Natriumform befand, und zwar Amberlite® 252 Na der Firma Rohm & Haas in eine Austauschersäule mit der Länge von 1 m und dem Volumen von 7,7 l gefüllt. Der Ionenaustauscher wurde anschließend in die Säureform überführt, indem 10 %ige Salzsäure mit einer Geschwindigkeit von 2 Bettvolumen pro Stunde 9 Stunden lang über die Austauschersäule gefahren wurde, bis der Natrium-Gehalt im Austrag < 1 ppm war. Anschließend wurde der Ionenaustauscher mit Wasser gewaschen. Der regenerierte Ionenaustauscher wurde daraufhin benutzt, um eine im wesentlichen alkalifreie Hexacyanocobaltatsäure herzustellen. Hierzu wurde eine 0,24 molare Lösung von Kaliumhexacyanocobaltat in Wasser mit einer Geschwindigkeit von einem Bettvolumen pro Stunde über den Ionenaustauscher gefahren. Nach 2,5 Bettvolumen wurde von der Kaliumhexacyanocobaltat-Lösung auf Wasser gewechselt. Die erhaltenen 2,5 Bettvolumen hatten im Mittel einen Gehalt von 4,5 Gew.-% Hexacyanocobaltatsäure und Alkaligehalte < 1 ppm.

Zur Herstellung des Katalysators wurden anschließend 8553,5 g Zinkacetat-Lösung (Gehalt an Zinkacetat-Dihydrat: 8,2 Gew.-%, Gehalt an Pluronic® PE 6200, d. h. einem Blockcopolymer aus Ethylenoxid und Propylenoxid, das zur Steuerung der Kristallmorphologie eingesetzt wird, 1,3 Gew.-%) in einem 20 1-Reaktor vorgelegt und unter Rühren auf 60°C hochgeheizt. Anschließend wurden 9956 g Hexacyanocobaltatsäure-Lösung (Cobaltgehalt 9 g/l, Gehalt an Pluronic® PE 6200 1,3 Gew.-%) innerhalb von 20 min bei 60°C unter stetigem Rühren zugeführt. Die erhaltene Suspension wurde noch weitere 60 min bei 60°C nachgerührt. Anschließend wurde der so erhaltene Feststoff abfiltriert und mit dem 6-fachen des Kuchenvolumens gewaschen. Der feuchte Filterkuchen wurde anschließend in Polypropylenglykol der Molmasse 400 g/mol dispergiert.

Die so erhaltene Dispersion wurde als Katalysator eingesetzt. Die Reaktion wurde in einem Rührkesselreaktor mit Mantelkühlung durchgeführt. Nach der Katalysatorzugabe wurde 1 h im Vakuum entwässert und propoxyliert. Es ergab sich eine symmetrische Molekulargewichtsverteilung ohne hochmolekulare Bestandteile. Die Viskosität betrug bei 25°C 827 mPas. Der Gehalt an ungesättigten Bestandteilen betrug lediglich 0,0062 und der Cycloacetalgehalt 0,05 ppm. Die erreichte Raum-Zeit-Ausbeute betrug 220 kg/m³/h.

### Beispiel 1

Vergleichsbeispiel 3 wurde wiederholt, jedoch in einem Rührkesselreaktor mit außenliegendem Wärmetauscher wiederholt. Es ergab sich, wie in Vergleichsbeispiel 3, eine vollkommen symmetrische Molekulargewichtsverteilung ohne hochmolekulare Bestandteile. Die Viskosität betrug bei 25°C 595 mPas. Der Gehalt an ungesättigten Bestandteilen betrug 0,0061 und der Cycloacetalgehalt 0,04 ppm. Die erreichte Raum-Zeit-Ausbeute betrug 290 kg/m³/h. Somit wurde durch Einsatz eines außenliegenden Wärmetauscher eine höhere Raum-Zeit-Ausbeute und gleichzeitig eine Verbesserung der Produktqualität erzielt.

## Patentansprüche

1. Verfahren zur Herstellung von Polyetherpolyolen durch die Umsetzung von Diolen oder Polyolen mit Ethylenoxid, Propylenoxid, Butylenoxid oder Gemischen hiervon in Gegenwart eines suspendierenden Multimetallcyanidkomplex-Katalysators vom Zn-Co-Typ, der in einem zweistufigen Prozess hergestellt wurde, wonach zunächst eine im wesentlichen alkalifreie Hexacyanocobaltatsäure und anschließend der suspendierte Multimetallcyanidkomplex-Katalysator durch Fällung erhalten wurde, in einem Rührkessel-Reaktor, wobei das Reaktionsgemisch mittels einer Pumpe über einen außen liegenden Wärmetauscher im Kreis geführt wird.

2. Verfahren nach Anspruch 1, **dadurch gekennzeichnet, daß** die Pumpe eine Schraubenspindelpumpe ist,

3. Verfahren nach Anspruch 1 oder 2, **dadurch gekennzeichnet, daß** die Förderrate der Pumpe so eingestellt ist, daß der Reaktorinhalt 5 bis 100 mal, bevorzugt 20 bis 50 mal pro Stunde, im Kreis geführt wird.

4. Verfahren nach einem der Ansprüche 1 bis 3, **dadurch gekennzeichnet, daß** das Verfahren in semi-batch-Fahrweise durchgeführt wird.

5. Verfahren nach einem der Ansprüche 1 bis 4, **dadurch gekennzeichnet, daß** die Umsetzung bei einer Temperatur im Bereich von 80 bis 200°C und einem Druck im Bereich von 1 bis 100 bar durchgeführt wird.

6. Verfahren nach Anspruch 5, **dadurch gekennzeichnet, daß** die Umsetzung bei einer Temperatur im Bereich von 90 bis 160°C und einem Druck von 2 bis 20 bar durchgeführt wird.

7. Verfahren nach einem der Ansprüche 1 bis 6, **dadurch gekennzeichnet, daß** der Multimetallcyanidkomplex-Katalysator weitgehend oder vollständig kristallin ist.

## Claims

1. A process for the preparation of polyetherpolyols by reacting diols or polyols with ethylene oxide, propylene oxide, butylene oxide or a mixture thereof in the presence of a suspended multimetal cyanide complex catalyst of the Zn-Co-type, which has been prepared in a two-step process, wherein at first a basically alkali free hexacyanocobaltic acid and subsequently the suspended multimetal cyanid complex catalyst has been obtained by precipitation in a stirred kettle reactor, the reaction mixture being circulated via an external heat exchanger by means of a pump.

2. A process as claimed in claim 1, wherein the pump is a screw pump.

3. A process as claimed in claim 1 or 2, wherein the delivery of the pump is adjusted so that the reactor content is circulated from 5 to 100, preferably from 20 to 50, times per hour.

4. A process as claimed in any of claims 1 to 3, wherein the process is carried out by the semibatch procedure.

5. A process as claimed in any of claims 1 to 4, wherein the reaction is carried out at from 80 to 200 °C and from 1 to 100 bar.

6. A process as claimed in claim 5, wherein the reaction is carried out at from 90 to 160°C and from 2 to 20 bar.

7. A process as claimed in any of claims 1 to 6, wherein the multimetal cyanide complex catalyst is substantially or completely crystalline.

## Revendications

1. Procédé de préparation de polyétherpolyols par réaction de diols ou de polyols avec l'oxide d'éthylène, l'oxide de propylène, l'oxide de butylène ou des mélanges de ceux-ci en présence d'un catalyseur à complexe cyanure multimétallique de type Zn-Co, obtenu par un procédé en deux étapes comme quoi au préalable un acid hexacyanocobaltic essentiellement exempt d'alkali et ensuite le catalyseur à complexe cyanure multimétallique ayant été obtenu par précipitation, suspendu dans un réacteur à cuve agitée, dans lequel le mélange réactionnel est recirculé au moyen d'un pompe par l'intermédiare d'un échangeur de chaleur se trouvant à l'extérieur.

2. Procédé selon la revendication 1, **caractérisé en ce que** la pompe est une pompe à broche hélicoïdale.

3. Procédé selon la revendication 1 ou 2, **caractérisé en ce que** le débit de circulation de la pompe est réglé de sorte que le contenu du réacteur est recirculé, de 5 à 100 fois, de préférence 20 à 50 fois par heure.

4. Procédé selon l'une quelconque des revendications 1 à 3, **caractérisé en ce que** le procédé est réalisé dans un mode semi-discontinu.

5. Procédé selon l'une quelconque des revendications 1 à 4, **caractérisé en ce que**, la réaction est réalisée à une température dans la plage de 80 à 200 °C et à une pression dans la plage de 1 à 100 bars.

6. Procédé selon la revendication 5, **caractérisé en ce que**, la réaction est réalisée à une température dans la plage de 90 à 160 °C et à une pression de 2 à 20 bars.

7. Procédé selon l'une quelconque des revendications 1 à 6, **caractérisé en ce que**, le catalyseur à complexe cyanure multimétallique est en grand partie ou complètement cristallin.
